(19) **Europäisches Patentamt**

**European Patent Office**

**Office européen des brevets**

(11) **EP 1 209 689 B1**

(12) **EUROPÄISCHE PATENTSCHRIFT**

(45) Veröffentlichungstag und Bekanntmachung des Hinweises auf die Patenterteilung:
**26.05.2004   Patentblatt 2004/22**

(51) Int Cl.7: **G12B 21/06**, G12B 21/02

(21) Anmeldenummer: **01127501.3**

(22) Anmeldetag: **17.11.2001**

(54) **Verfahren zur Herstellung von integrierten Abtastsonden**

Method of manufacturing integrated scanning probes

Procédé de fabrication de sondes à balayage intégrées

(84) Benannte Vertragsstaaten:
**AT BE CH CY DE DK ES FI FR GB GR IE IT LI LU MC NL PT SE TR**

(30) Priorität: **21.11.2000  DE 10057656**

(43) Veröffentlichungstag der Anmeldung:
**29.05.2002   Patentblatt 2002/22**

(73) Patentinhaber: **Forschungszentrum Rossendorf e.V.**
**01328 Dresden (DE)**

(72) Erfinder:
• **Schmidt, Bernd, Dr. rer. nat.**
  **01187 Dresden (DE)**
• **Bischoff, Lothar, Dr. rer. nat.**
  **01309 Dresden (DE)**
• **Eng, Lukas, Prof. Dr.**
  **01219 Dresden (DE)**

(56) Entgegenhaltungen:
**EP-A- 0 500 980**

• **SCHMIDT B ET AL: "Writing FIB implantation and subsequent anisotropic wet chemical etching for fabrication of 3D structures in silicon" SENSORS AND ACTUATORS A, ELSEVIER SEQUOIA S.A., LAUSANNE, CH, Bd. 61, Nr. 1-3, 1. Juni 1997 (1997-06-01), Seiten 369-373, XP004092252 ISSN: 0924-4247**
• **"Scanning aperture microscope" IBM ALMADEN RESEARCH CENTER, [Online] XP002213378 Gefunden im Internet: <URL:www.almaden.ibm.com/st/projects/nan os cale/scanningap/> [gefunden am 2002-09-10]**

**Beschreibung**

Die Erfindung bezieht sich auf ein Verfahren zur Herstellung von integrierten Abtastnadeln, bestehend aus einem Support, einem Biegebalken und einer Nadelspitze aus Silizium, mit lateralen Dimensionen < 10 μm und Dicken der Biegebalken von 150 nm für verschiedene Methoden der Rastersondenmikroskopie, bevorzugt für die optische Rasternahfeldmikroskopie (SNOM, engl.: Scanning Near-Field Optical Microscopy).

Abtastnadeln für die Rastersondenmikroskopie, besonders für die Rasterkraftmikroskopie (RKM) werden vorwiegend durch geeignete Strukturierungsverfahren, wie die fotolithografische Schichtstrukturierung, und das nasschemische Ätzen von Siliziumdioxid ($SiO_2$) oder Siliziumnitrid ($Si_3N_4$) auf Silizium(Si)-Wafern hergestellt [T.R. Albrecht, S. Akamine, T.E. Carver, C.F. Quate, J. Vac. Sci. Technol., A8 (1990) 3386]. Die dreidimensionale Strukturierung der Nadelspitze erfolgt derart, dass die Nadelspitze in diesem Fall immer in das Siliziumsubstrat ragt. Durch lokales Abätzen des Si-Substrates unter dem Biegebalken und der Nadelspitze werden Biegebalken und Nadelspitze freigelegt. Die Biegebalken mit den Nadelspitzen aus $SiO_2$ oder $Si_3N_4$ werden nachfolgend auf einen geeigneten Glaskörper gebondet, und das restliche Si-Substrat durch Ätzen entfernt. Ein Herstellungsverfahren, das nasschemische und trockenchemische Ätzprozesse kombiniert, erlaubt es, den komplizierten Bondprozess zur Montage der Abtastnadel mit dem Glasträger zu umgehen [O. Wolter, T. Bayer, J. Greschner, J. Vac. Sci. Technol., B9 (1991) 1353]. Nadelspitze, Biegebalken und Halter werden in diesem Fall aus kristallinem Si hergestellt. Dadurch werden besonders thermische und mechanische Spannungsprobleme zwischen den gebondeten Partnern eliminiert.

Es ist auch ein Verfahren zur Herstellung von Mikronadeln durch großflächige Ionenbestrahlung über eine Maske bekannt (EP 0 500 980 A1).

Einer weiteren Miniaturisierung der genannten Biegebalken und Nadelspitzen sind mit den bisher bekannten Herstellungsverfahren Grenzen gesetzt. Das betrifft besonders die Länge der Biegebalken mit Abmessungen kleiner 10 μm und die Dicke der Biegebalken mit Dicken kleiner 1 μm. Diese Größen bestimmen die Federkonstante der Biegebalken, die eine der wesentlichsten Kenngrößen für den späteren Einsatz darstellen. Des weiteren werden alle Nadelspitzen ohne integrierte Apertur hergestellt und sind somit für einen Einsatz in der optischen Nahfeldmikroskopie (SNOM) ungeeignet. Unter Verwendung eines feinfokussierten Ionenstrahls wurden in $Si_3N_4$-Nadelspitzen durch Ionenzerstäubung Aperturen mit einem Durchmesser im Bereich von 40... 100 nm gebohrt [http://www.almaden.ibm.com/st/projects/nanoscale /scanningap/] und die derart hergestellten Nadelspitzen für die SNOM getestet.

Weiterhin ist es bekannt, durch Bestrahlung von Silizium mit einem feinfokussierten Ionenstrahl und nachfolgendem Ätzprozess freitragende Silizium-Gebiete an einer Silizium-Oberfläche herzustellen (Sensors And Actuators A, Elsevier Sequoia S.a., Lausanne, Ch (01-06-1997) 61 (1-3), 369-373).

Nadelspitzen für den Einsatz in der SNOM bestehen üblicherweise aus gezogenen optischen Fasern oder auch Glaskapillaren mit einem Durchmesser der Faser bzw. der Öffnung am Ende von ca. 50 bis 100 nm [Near-Field Nano/Atom Optics and Technology, ed.: M. Ohtsu, Springer Verlag, Berlin, 1998]. Allerdings können diese optischen Nahfeldsonden so noch nicht direkt in der Rastersondenmikrokopie eingesetzt werden. Es ist jedoch möglich, direkt das durch die Apertur des optischen Nahfeldsensors emittierte oder aufgenommene Licht zur Steuerung einer konstanten Abtasthöhe zwischen Sonde und Probenoberfläche einzusetzen. Als praktikabler hat sich der Einsatz eines unabhängigen Regelmechanismus durch Kraft- oder Tunnelmikroskopie erwiesen, wobei in einem relativ komplizierten und insbesondere mikroskopisch nicht reproduzierbaren zweiten Schritt der optische Nahfeldsensor z.B. auf einen geeigneten Biegebalken aufgesetzt wird, die optische Faser selbst zum Biegebalken gebogen oder für die Rastertunnelmikroskopie (RTM) geeignet bedampft werden muss.

Alle genannten Verfahren zur Herstellung von monolithischen Abtastnadeln, bestehend aus einem Support, einem Biegebalken und einer Nadelspitze, sind dadurch gekennzeichnet, dass sie in einem komplizierten dreidimensionalen Strukturierungsprozess, der eine Vielzahl von Lithografie- und nasschemischen und/oder trockenchemischen Ätzprozessen beinhaltet, hergestellt werden. Der hybride Aufbau von Glas-Kapillaren und Biegebalken für die Anwendung von Abtastnadeln in der SNOM ist ebenfalls sehr kompliziert und ist durch eine geringe Re-produzierbarkeit der Spitzen- und Aperturparameter gekennzeichnet, was für die Qualität und Funktionsweise der SNOM unerwünscht ist.

Es ist daher Aufgabe der hier vorliegenden Erfindung, ein Verfahren zu schaffen, das die Erzeugung von miniaturisierten, integrierten Abtastnadeln, bestehend aus Support, Biegebalken und hohler Nadelspitze mit und ohne Apertur, mit geringerem Aufwand erlaubt und die somit bevorzugt für den Einsatz in der SNOM geeignet sind.

Erfindungsgemäß wird die Aufgabe mit den in den Patentansprüchen dargelegten Merkmalen gelöst. Dabei ist es wesentlich, dass mit einem feinfokussierten Ionenstrahl (Focused Ion Beam - FIB) mit einem Strahldurchmesser < 100 nm eine durch Ätzen in einem Si-Wafer hergestellte Si-Membran lokal in der pyramidenstumpfförmigen Grube bestrahlt wird. Das zu bestrahlende Gebiet der Si-Membran wird durch die Form und Dimension des Biegebalkens und die Größe bzw. Form der hohlen Nadelspitze definiert und wird dann in geeigneter Art und Weise mit dem FIB abgerastert. Als Ionen des FIB werden Dotierungselemente der III.

Hauptgruppe (Akzeptoren: B, Al, Ga, In), insbesondere Gallium (Ga) und Indium (In), gewählt, die in einem n-leitenden Si-Substrat durch Ionenimplantation eine p-leitende Schicht erzeugen. B- und Al-Ionen sind jedoch für die Erzeugung einer hohlen Spitze weniger geeignet, da sie auf Grund ihrer geringen Masse nur einen geringen Zerstäubungseffekt verursachen. Die Anzahl der implantierten Ionen pro Flächeneinheit (Dosis) ist dabei so groß, dass sie eine Dotandenkonzentration in der p-leitenden Schicht von > $5*10^{19}$ $cm^{-3}$ (entarteter Halbleiter) erzeugen. Die Schichtdicke, in der die hohe Dotandenkonzentration erreicht wird, hängt von der Energie der implantierten Ionen ab und kann über diese eingestellt werden. Für die Formierung der hohlen Spitze wird die lokale Ionendosis mit D = $(1-10^{17}...5·10^{20})$ $cm^{-2}$ so hoch gewählt, dass durch Ionenzerstäubung in der Si-Membran ein Krater erzeugt wird, der die Form des FIB abbildet und ausreichend durch eine Gauss'sche Glokkenkurve beschrieben werden kann. Die Tiefe des Kraters wird durch die lokale Ionendosis entsprechend der Beziehung

$$h=(k·D·Y)/N,$$

wobei

k eine materialspezifische Redepositionskonstante,

Y der Zcrstäubungskoeffizient und

N die atomare Konzentration des Si-Substrates bedeuten,
eingestellt und liegt im Bereich 0,3..2,5 $\mu$m bei Bestrahlung mit Ga-Ionen mit einer Dosis von $1·10^{18}...5·10^{20}$ $cm^{-2}$. Dabei wird im Krater nicht nur Si-Material durch Zerstäubung abgetragen, sondern die Seitenwände des Kraters werden gleichzeitig durch Ionenimplantation dotiert. Zur Erzeugung von Nadelspitzen mit einer Höhe > 2,5 $\mu$m wird der feinfokussierte Ionenstrahl so über ein kreisförmiges Gebiet geführt wird, dass die Dosis radialsymmetrisch zum Kreiszentrum zunimmt und dort einen Wert von $5·10^{20}$ $cm^{-2}$ erreicht. Der Durchmesser des zu bestrahlenden Kreisgebietes richtet sich dabei nach der Höhe der zu erzeugenden Nadelspitze.

Nach Ionenbestrahlung mit dem FIB werden die nichtbestrahlten Membrangebiete durch nasschemisches, anisotropes und selektives Ätzen mit chemischen Ätzmitteln, vorwiegend basischen anorganischen und organischen Lösungen, in einem einzigen Ätzschritt entfernt. Dabei wird der Effekt ausgenutzt, dass für hochdotierte p-leitende Schichten die Ätzrate um bis zu einem Faktor 100 gegenüber dem n-leitenden Membrangebiet, bzw. n-leitenden Si-Substrat, reduziert ist. Somit wird mit hoher Selektivität und damit selbstjustierend das n-leitende Si-Material im Membrangebiet nur dort vollständig entfernt, wo keine Dotierung mit Akzeptor-Ionen durch den FIB stattfand. Es verbleibt der freitragende und einseitig am Rahmen des Si-Substrates eingespannte Si-Biegebalken mit der am Ende des Biegebalkens befindlichen hohlen Nadelspitze aus Si mit oder ohne einer definierten Apertur.

Wird die Kratertiefe vor dem nasschemischen, selektiven Ätzschritt durch eine punktförmige oder kreisförmige Bestrahlung mit dem FIB so eingestellt, dass diese kleiner als die Membrandicke ist, entsteht eine aus Si bestehende hohle und am Ende geschlossene Nadelspitze. Im Falle, dass die Kratertiefe größer als die Membrandicke ist, entsteht an der Kraterspitze eine Apertur, deren Durchmesser im Bereich von 10 nm bis 100 nm gezielt über die Ionendosis des FIB eingestellt werden kann, da sich der Krater in Richtung der Spitze entsprechend dem Gaussförmigen Kraterprofil verjüngt.

Der Vorteil des Verfahrens gegenüber den bisherigen Verfahren zur Herstellung von integrierten Abtastnadeln für die Rastersondenmikroskopie besteht darin, dass Form und Größe der Abtastnadeln, bestehend aus Biegebalken und Nadelspitze, unter Verwendung des FIB in einem weiten Parameterbereich frei wählbar und mit wesentlich verringerten Abmessungen der Biegebalkenlänge, der Querschnittsform des Biegebalkens und besonders der Biegebalkendicke hergestellt werden können. Aufgrund der sehr kleinen Biegebalkendicke von 30...150 nm und der wählbaren Querschnittsform des Biegebalkens ergibt sich gegenüber bisheriger Abtastnadeln der Vorteil, dass die Federkonstante des Biegebalkens in einem weiteren Bereich als bisher eingestellt werden kann. Dabei ist für die Formgebung der gesamten Abtastnadel in einer dünnen Si-Membran nur ein einziger fotolithografischer Schichtstrukturierungsschritt zur Ätzmaskenherstellung für die Erstellung des Ausgangssubstrates mit der dünnen Si-Membran mit einer Dicke im Bereich 3...10 $\mu$m notwendig. Durch die schreibende FIB-Implantation kann auf weitere Lithografieschritte im Verfahren verzichtet werden. Die bisher notwendigen, mindestens drei, chemischen Ätzschritte werden mit dem vorgeschlagenen Verfahren auf einen einzigen selbstjustierenden nasschemischen Ätzschritt reduziert.

Ein weiterer Vorteil dieses Verfahrens ist, dass die Formgebung der eigentlichen Nadelspitze keine zusätzlichen nasschemischen Ätzprozessschritte oder Prozessschritte der Zerstäubung (Nadelspitzenabtrag) mittels Ionen erfordert, sondern ebenfalls selbstjustierend im gleichen Schritt der Ionenbestrahlung mit dem FIB durchgeführt wird.

Vorteilhaft gegenüber bisherigen Verfahren zur Herstellung von Abtastnadeln mit einer Apertur für den Einsatz in der SNOM ist weiterhin die monolithische Formgebung der Apertur am Ende der Nadelspitze während des Prozessschrittes der FIB-Bestrahlung. Zusätzliche Verfahrensschritte, wie die Herstellung der Apertur in herkömmlichen Abtastnadeln durch Ionenzerstäubung mittels FIB oder hybride Aufbautechniken unter Verwendung von optischen Fasern oder Glaskapillaren, sind nicht erforderlich.

Ein weiterer wesentlicher Vorteil des Verfahrens besteht darin, dass mit dem beschriebenen Verfahren in einer Si-Membran in zeilenförmiger Anordnung gleichzeitig während des Prozessschrittes der FIB-Bestrahlung mehrere Abtastnadeln mit gleicher oder unterschiedlicher Federkonstante des Biegebalkens, mit gleicher oder unterschiedlicher Höhe der Nadelspitze und mit gleicher oder unterschiedlicher Größe der Apertur hergestellt werden können.

Mit dem Verfahren können vorteilhaft geschlossene trichterförmige Nadelspitzen formiert werden, die spitz auslaufen, was insbesondere eine neue Methode zur Herstellung von Spitzen mit definiertem Spitzenradius für die Rastersondenmikroskopie, vorwiegend die Rastertunnelmikroskopie (RTM), die Rasterkraftmikroskopie (RKM) und die optische Nahfeldmikroskopie (SNOM), erlaubt.

Die mit Ionenbestrahlung mittels feinfokussiertem Ionenstrahl hergestellten Nadelspitzen lassen sich vorteilhaft für die RTM, die RKM, und insbesondere die SNOM eingesetzt, speziell auch dann, wenn die hergestellten hohlen Nadelspitzen zusätzlich noch von einer oder auch beiden Seiten mit anderen Materialien, vorzugsweise durch Bedampfen, beschichtet wurden. Durch Variation der Dicke der Beschichtung kann auch der Aperturdurchmesser noch zusätzlich definiert beeinflusst werden.

Die durch Bestrahlung mit einem feinfokussierten Ionenstrahl und nasschemisches Ätzen entstandenen hohlen Nadelspitzen können weiterhin durch Bedampfen, Beschichten und andere Methoden mit einem beliebigen Stoff befüllt, angefüllt oder versehen werden, insbesondere mit organischen und anorganischen Materialien, Flüssigkeiten, und Nanopartikeln. Die Nadelspitzen, welche befüllt wurden, lassen sich für viele Messverfahren von elektrischen, mechanischen, optischen und anderen physikalischen, chemischen, etc, Größen einsetzen, z.B. für die Rastersondenmikroskopie oder auch als Mikro- und Nanopipetten.

Die Erfindung wird nachstehend an einem Ausführungsbeispiel näher erläutert.

In den zugehörigen Zeichnungen zeigen

Fig. 1 die Formgebung der integrierten Abtastnadel mit

    a) dem Si-Substrat mit Si-Membran,
    b) der Bestrahlung des Si-Substrats mittels FIB,
    c) der Entfernung des nichtbestrahlten Si-Substrates durch nasschemisches, anisotropes und selektives Ätzen und
    d) der fertig hergestellten integrierten Abtastnadel.

Fig. 2 die Formgebung der Nadelspitze mit und ohne Apertur einer integrierten Abtastnadel

    a) mit einer Höhe von 0,3 bis 2,5 µm und geschlossener Spitze,
    b) mit einer Höhe bis 5 µm und geschlossener Spitze und
    c) mit einer Höhe gleich der Membrandicke und offener Spitze.

Fig. 3 verschiedene Geometrien der lateralen Formgebung und des Querschnitt für die Biegebalken von integrierten Abtastnadeln

Fig. 4 die zeilenförmige Anordnung von mehreren integrierten Abtastnadeln mit gleicher oder unterschiedlicher Federkonstante des Biegebalkens, mit gleicher oder unterschiedlicher Höhe der Spitze und mit gleicher oder unterschiedlicher Größe der Apertur.

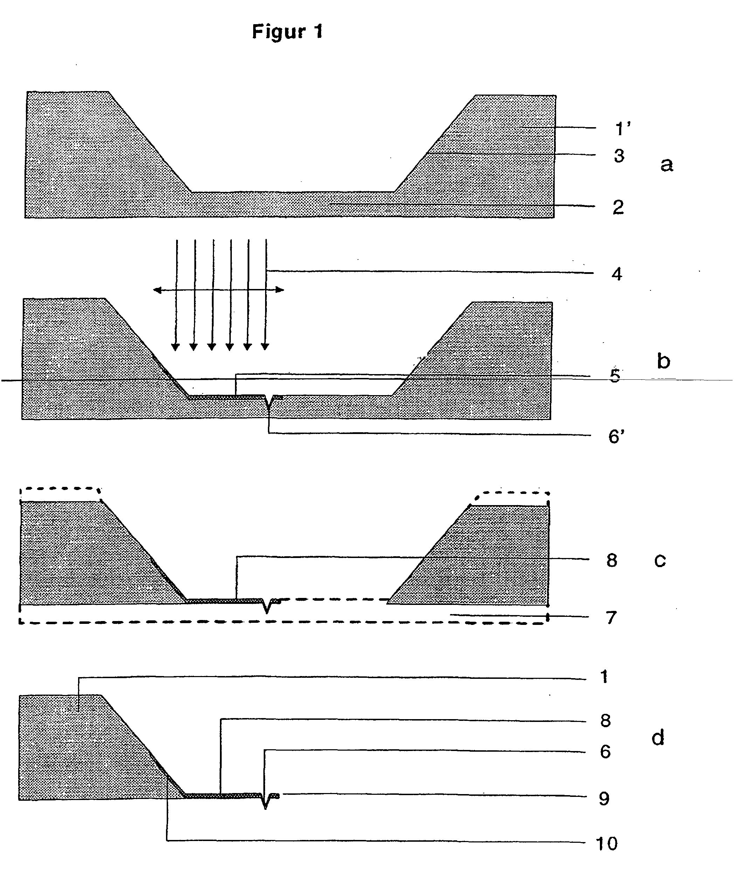

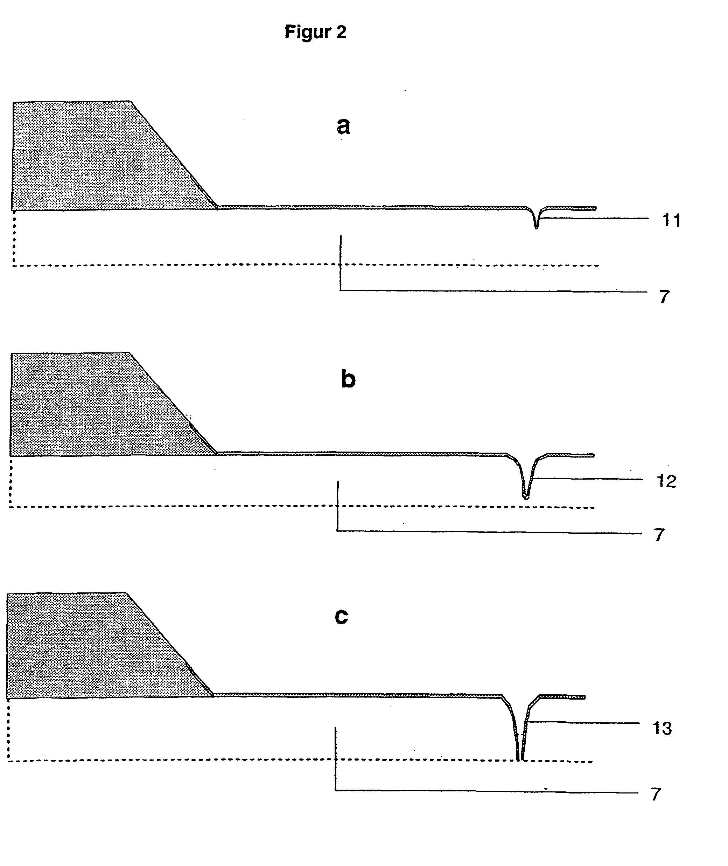

Als Ausgangssubstrat wird ein <100>-orientierter Si-Wafer (1') verwendet, der durch anisotropes nasschemisches Ätzen lokal abgedünnt wurde, um ein definiertes Si-Membrangebiet (2) zur Verfügung zu haben (Fig. 1a). Die Dicke der kristallinen Si-Membran (2) beträgt üblicherweise 3...10 µm. Die Oberfläche des flachen Bodens der Membran und teilweise die geneigten seitlichen, die Membran begrenzenden, <111>-orientierten Kristalloberflächen (3) werden mit Ga-Ionen eines fein fokussierten Ionenstrahls (4) bestrahlt. Die Energie der Ga-Ionen beträgt 35 keV, was einer mittleren Eindringtiefe der Ionen in die Membran von 30 nm entspricht. Dabei wird der FIB nur über das Gebiet (5) geführt, das der vorgegeben späteren lateralen Geometrie der Abtastnadel, bestehend aus Support, Biegebalken und Nadelspitze, entspricht. Dieses Gebiet wird mit einer Ionendosis von $D = (1...10) \cdot 10^{16}$ cm$^{-2}$ bestrahlt und ist bezüglich seiner lateralen Form frei wählbar. Am Ort der zu erzeugenden Nadelspitze (6) wird mit dem FIB eine Punktbestrahlung durchgeführt, um durch Ionenzerstäubung den trichterförmigen Krater (6') zu erodieren (Fig. 1b). Entsprechend der gewünschten Tiefe des Kraters wird hier die Ionendosis im Bereich $1 \cdot 10^{18}$ bis $3 \cdot 10^{20}$ cm-2 gewählt. Bei einer Dosis von $D = 1 \cdot 10^{18}$ cm$^{-2}$ wird Fig. 2a ein hohler trichterförmiger Krater (11) von 0,3 µm Tiefe erzeugt. Mit Erhöhung der Ionendosis auf $D = 3 \cdot 10^{20}$ cm$^{-2}$ erhöht sich die Kratertiefe (12) nach Fig. 2b auf ca. 2,5 µm. Durch das hohe Aspektverhältnis der Krater (Tiefe/Durchmesser) sind die erforderlichen Ionendosen in Folge von Redepositionseffekten höher als es die Theorie für planare Strukturen bestimmt.

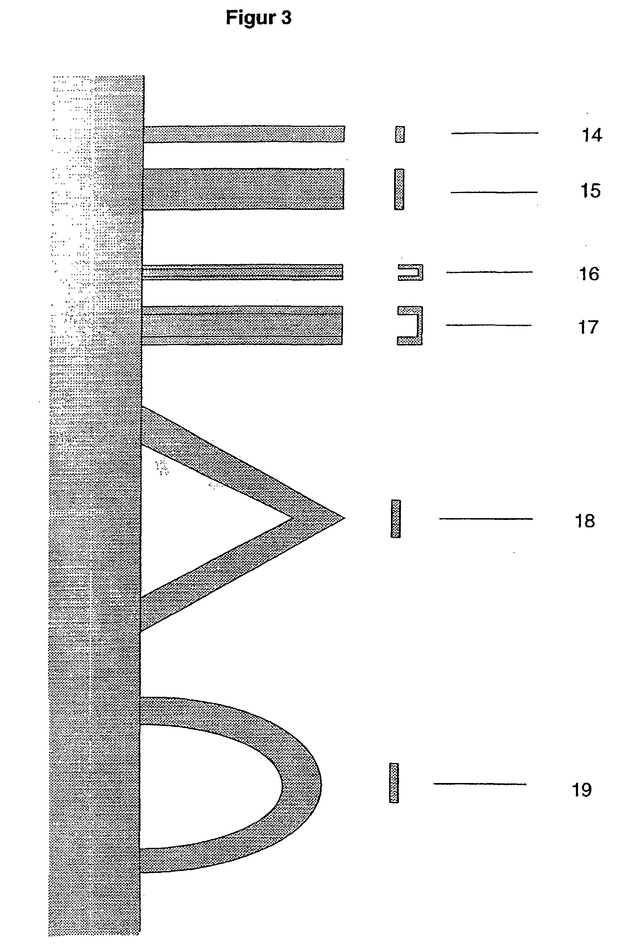

Zur Herstellung von Nadelspitzen mit Höhen größer 2,5 µm wird der feinfokussierte Ionehstrahl so über ein kreisförmiges Gebiet geführt, dass die Dosis radialsymmetrisch zum Kreiszentrum zunimmt und dort einen Wert von $5 \cdot 10^{20}$ cm$^{-2}$ erreicht. Somit kann die Tiefe des Kraters auf über 3 µm vergrößert werden, so dass der Krater (13) die Membran (2) vollständig durchdringt. Nach der Bestrahlung wird das Si-Substrat in Fig. 1b in einer basischen 30%-igen KOH-Wasser- Lösung bei einer Temperatur von 80 °C geätzt. Die Si-Ätzrate in <100>-Richtung des Si-Substrates beträgt dabei 1 µm/min. Somit wird z.B. eine 3 µm dicke Si-Membran (2) von beiden Seiten in 1,5 min vollständig abgetragen (7) und es verbleibt das mit Ga-Ionen implantierte Gebiet (8) (Biegebalken und Nadelspitze) freitragend im Bereich der vorherigen Membran. Im Dosisbereich $D = (1...10) \cdot 10^{16}$ cm$^{-2}$ besitzt der freigeätzte Biegebalken (9) in Fig. 3 eine rechteckige Form (14,15) mit einer Dicke von 30....50 nm. Wird die Dosis auf D = (5...500)·$10^{17}$ cm$^{-2}$ erhöht, so besitzt der freigeätzte Biegebalken ein U-förmiges Querschnittsprofil (16,17). Breite, Länge und Querschnittsform der Biegebalken (14 bis 19) werden bei der Bestrahlung durch die mit dem FIB abzurastemde Fläche und die Ionendosis festgelegt.

Die teilweise implantierten schrägen (111)-Flächen nach Fig. 1b am Rand des Membrangebietes (10) dienen der Aufhängung des Biegebalkens. Da die Ätzrate an den (111)-Flächen (3) ca. um den Faktor 10 kleiner ist, werden von diesen Flächen während des Ätzens nur 0,3 µm abgetragen und das hier implantierte Gebiet (10) wird an den Randgebieten nur unbedeutend unterätzt. Die Tiefe der Unterätzung kann bei der Wahl der Größe des zu bestrahlenden Flächengebietes auf den schrägen (111)-Oberflächen (3) einkalkuliert werden.

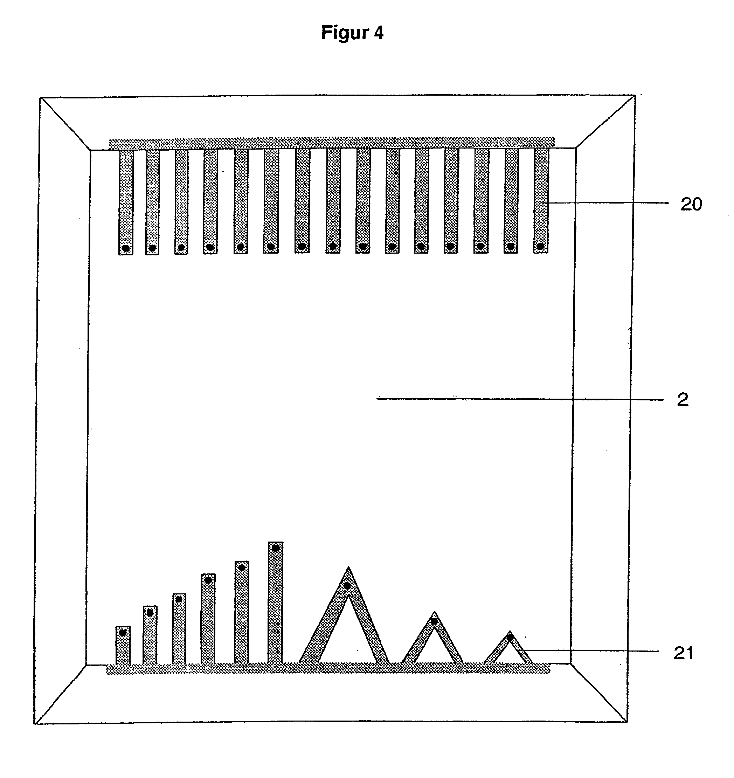

Wie in Fig. 4 dargestellt, können durch eine Ionenbestrahlung mittels FIB an verschiedenen Orten der Si-Membran (2) in zeilenförmiger Anordnung mit einem einzigen nachfolgenden Ätzschritt gleichzeitig mehrere Abtastnadeln mit gleicher (20) oder unterschiedlicher (21) Federkonstante des Biegebalkens, mit gleicher oder unterschiedlicher Höhe der Nadespitze und mit gleicher oder unterschiedlicher Größe der Apertur hergestellt werden.

**Patentansprüche**

1. Verfahren zur Herstellung von integrierten Abtastnadeln, bestehend aus einem Support, einem Biegebalken und einer hohlen Nadelspitze, wobei ein Substrat mittels eines fokussierten Ionenstrahles mit als Akzeptor wirkenden Ionen bestrahlt wird und die nicht mit Ionen bestrahlten Gebiete durch Ätzen in nur einem Ätzschritt abgetragen werden, **dadurch gekennzeichnet, dass**

das Substrat eine Siliziumsubstrat ist,

eine durch Ätzen in dem Siliziumsubstrat hergestellte Membran (2) in einer pyramidenstumpfförmigen Grube im Gebiet von Support (3), Biegebalken und Nadelspitze (8) lokal mit einem geführten Ionenstrahl (4) mit einem Strahldurchmesser kleiner als 100nm und Ionen einer Energie von 5 bis 200 keV und unterschiedlicher Dosis schreibend bestrahlt wird,

das Gebiet des Biegebalkens (5) zur Erzeugung eines rechteckigen (14;15) Querschnittsprofils mit einer Dosis von 1 × $10^{16}$ bis 1· $10^{17}$ cm$^{-2}$ bestrahlt wird oder zur Erzeugung eines U-förmigen Querschnittsprofils mit einer Dosis von 1 · $10^{17}$ bis 1 · $10^{20}$ cm$^{-2}$ bestrahlt wird und

eine hohle Nadelspitze (11) mit einer Höhe von 0,3 bis 2,5 µm durch eine punktförmige Bestrahlung mit einer lokalen Ionendosis im Bereich von 1 x $10^{17}$ bis 5 x $10^{20}$ cm$^{-2}$ formiert wird oder eine hohle Nadelspitze (12) mit einer Höhe größer als 2,5µm formiert wird, in dem der fokussierte Ionenstrahl so über ein kreisförmiges Gebiet geführt wird, dass die Dosis radialsymmetrisch zum Zentrum zunimmt und dort einen Wert von 5 x $10^{20}$ cm$^{-2}$ erreicht, wobei jeweils durch Ionenzerstäubung in der Membran ein Krater erzeugt wird.

2. Verfahren nach Anspruch 1, **dadurch gekennzeichnet, dass** die als Akzeptor wirkenden Ionen aus Elementen der dritten Hauptgruppe des Periodensystems der Elemente ausgewählt werden und vorzugsweise Gallium und Indium verwendet werden.

3. Verfahren nach Anspruch 1, **dadurch gekennzeichnet, dass** zur Erzeugung einer hohlen Nadelspitze (13) mit einer Apertur zwischen 10 und 100 nm die Ionendosis so gewählt wird, dass die Höhe der zu erzeugenden Nadelspitze größer als die Membrandicke (7) des Siliziumsubstrates ist.

4. Verfahren nach Anspruch 1, **dadurch gekennzeichnet, dass** das Ätzen mit basischen, nasschemischen und selektiven Ätzmitteln vorgenommen wird.

5. Verfahren nach Anspruch 1, **dadurch gekennzeichnet dass** der Ionenstrahl über verschiedene Flächen des Siliziumsubstrates geführt wird und mehrere Abtastnadeln (20;21) unterschiedlicher Geometrie auf einem Siliziumsubstrat nacheinander hergestellt werden.

**Claims**

1. Process for the manufacture of integrated scanning needles, consisting of a support, a beam and a hollow needle point, whereby a substrate is irradiated by means of a focused ion beam with ions functioning as acceptors and the areas not irradiated with ions are removed by etching in only one section, **characterized in that** the substrate is a silicon substrate, a membrane (2) produced in the silicon substrate by etching is irradiated locally in a truncated pyramid shaped pit in the area of the support (3), beam and needle point (8) with a guided ion beam (4) with a beam diameter smaller than 100 nm and ions with an energy of 5 to 200 keV and of different doses, the area of the beam (5) for producing a rectangular (14; 15) cross-section profile is irradiated with a dose of 1 x $10^{16}$ to $10^{17}$ cm$^{-2}$ or for producing a U-shaped cross-section profile is radiated with a dose of 1 x $10^{17}$ to 1 x $10^{20}$ cm$^{-2}$ and a hollow needle point (11) with a height of 0.3 to 2.5 µm is formed by punctual irradiation with a local ion dose of 1 x $10^{17}$ to 5 x $10^{20}$ cm$^{-2}$ or a hollow needle point (12) with a height greater than 2.5 µm is formed **in that** the focused ion beam is guided across a circular area so that the dose increases circularly to the center, where it reaches a value of 5 x 10$^{20}$ cm$^{-2}$, whereby a crater is produced respectively in the membrane through ion disintegration.

2. Process as claimed in claim 1, **characterized in that** the ions functioning as acceptors are chosen from among the elements of the third main group of the periodic table and that preferably gallium and indium are used.

3. Process as claimed in claim 1, **characterized in that** for producing a hollow needle point (13) with an aperture between 10 and 100 nm, the ion dose is such that the height of the needle tip to be produced is larger than the membrane thickness (7) of the silicon substrate.

4. Process as claimed in claim 1, **characterized in that** the etching is conducted with alkaline, wet-chemical and selective etching agents.

5. Process as claimed in claim 1, **characterized in that** the ion beam is guided across different surfaces of the silicon substrate and several scanning needles (20; 21) of varying geometry are produced consecutively on one silicon substrate.

**Revendications**

1. Procédé de fabrication d'aiguilles de balayage intégrées, comprenant un support, une barre de flexion et une pointe d'aiguille creuse, sachant qu'un substrat est balayé à l'aide d'un faisceau ionique focalisé avec des ions agissant comme accepteur et que les zones qui ne sont pas balayées avec des ions sont enlevées par corrosion en une seule étape de corrosion,

**caractérisé en ce que**

le substrat est un substrat de silicium,

une membrane (2) fabriquée par corrosion dans le substrat de silicium dans une piqûre en forme de pyramide tronquée dans la zone du support (3), de la barre de flexion et de la pointe d'aiguille (8) est balayée localement avec un faisceau ionique dirigé (4) présentant un diamètre inférieur à 100 nm et des ions d'une énergie de 5 à 200 keV et à dose variable,

la zone de la barre de flexion (5) est balayée avec une dose de 1 x 10$^{16}$ à 1.10$^{17}$ cm$^{-2}$ pour réaliser un profil de section rectangulaire (14 ; 15) ou avec une dose de 1 x 10$^{17}$ à 1.10$^{20}$ cm$^{-2}$ pour réaliser un profil de section en U et

une pointe d'aiguille creuse (11) d'une hauteur de 0,3 à 2,5 µm est formée par un balayage en forme de points avec une dose locale d'ions de l'ordre de 1 x 10$^{17}$ à 5 x 10$^{20}$ cm$^{-2}$ ou une pointe d'aiguille creuse (12) d'une hauteur supérieure à 2,5 µm est formée, le faisceau ionique focalisé étant dirigé au-dessus d'une zone en forme de cercle de sorte que la dose augmente selon une symétrie radiale par rapport au centre et y atteint une valeur de 5 x 10$^{20}$ cm$^{-2}$, sachant que des piqûres sont créées à chaque fois par la pulvérisation des ions dans la membrane.

2. Procédé selon la revendication 1, **caractérisé en ce que** les ions agissant comme accepteur sont sélectionnés à partir d'éléments du troisième groupe principal du système de périodes des éléments et que sont utilisés de préférence du gallium et de l'indium.

3. Procédé selon la revendication 1, **caractérisé en ce que** pour créer une pointe d'aiguille creuse (13) avec une ouverture entre 10 et 100 nm, la dose d'ions est sélectionnée de manière à ce que la hauteur de la pointe d'aiguille devant être créée soit supérieure à l'épaisseur de la membrane (7) du substrat de silicium.

4. Procédé selon la revendication 1, **caractérisé en ce que** la corrosion est effectuée avec des agents caustiques basiques, chimiques humides et sélectifs.

5. Procédé selon la revendication 1, **caractérisé en ce que** le faisceau ionique est dirigé au-dessus de différentes surfaces du substrat de silicium et que plusieurs aiguilles de balayage (20 ; 21) de géométrie variable sont fabriquées les unes après les autres sur un substrat de silicium.

**Figur 1**

**Figur 2**

a

11

7

b

12

7

c

13

7

# Figur 3

14

15

16

17

18

19

**Figur 4**